# DEMANDE DE BREVET EUROPEEN

(11) **EP 3 217 231 A1**
(43) Date de publication de la demande: **13.09.2017**
(21) Numéro de dépôt: 16159710.9
(22) Date de dépôt: 10.03.2016
(51) Int. Cl.: G04G 9/00, G01C 21/36, G04C 17/00, G04G 21/04

(54) **SYSTEME DE NAVIGATION A AFFICHAGE DEPORTÉ**

(71) Demandeur: Tissot S.A., 2400 Le Locle (CH)
(72) Inventeur: VIANIN, Benoît, 2400 Le Locle (CH); SAUNDERS, Laurie, Môtiers 1787 (CH)
(74) Mandataire: Goulette, Ludivine

(57) **Abrégé**

La présente invention concerne un ensemble comprenant au moins un premier terminal (10) comportant un boitier (11) associé à un bracelet (12), un mouvement horloger électronique (13) utilisé pour afficher l'heure via des moyens d'affichage (15) et alimenté par une source d'énergie (14), et agencé dans ledit boitier, ledit premier terminal comprenant en outre un module de communication (16), et un second terminal (20) comportant un boitier (21) dans lequel un module électronique (22) est agencé, ledit module électronique comprenant un processeur (23) alimenté par une source d'énergie (24) et connecté à des moyens d'affichage (25), une unité de localisation (26) munie d'une antenne et apte à recevoir des signaux satellites, le module électronique comprenant en outre un module de communication (28) apte à communiquer avec le module communication du premier terminal, ladite unité de localisation fonctionne avec un algorithme apte à définir un tracé en passant par une multitude de points de passage (Pii).

## Description

La présente invention concerne un ensemble comprenant au moins un premier terminal comportant un boitier associé à un bracelet, un mouvement horloger électronique utilisé pour afficher l'heure via des moyens d'affichage et alimenté par une source d'énergie, et agencé dans ledit boitier, ledit premier terminal comprenant en outre un module de communication, et un second terminal comportant un boitier dans lequel un module électronique est agencé, ledit module électronique comprenant un processeur alimenté par une source d'énergie et connecté à des moyens d'affichage, une unité de localisation munie d'une antenne et apte à recevoir des signaux de positionnement, le module électronique comprenant en outre un module de communication apte à communiquer avec le module communication du premier terminal, ladite unité de localisation fonctionne avec un algorithme apte à définir un tracé en passant par une multitude de points de passage.

### ART ANTERIEUR

Les montres électroniques ont évolué afin d'intégrer de plus en plus de fonctions. L'une de ces fonctions est la fonction de positionnement par satellites en utilisant un module GPS. Un tel module GPS consiste en une puce associée à au moins une antenne, cette puce étant capable de capter les signaux d'au moins quatre satellites équipés de plusieurs horloges atomiques pour, en calculant les temps de propagation de ces signaux entre les satellites et elle, connaître sa distance par rapport à ceux-ci et, par trilatération, situer précisément en trois dimensions n'importe quel point placé en visibilité des satellites GPS.

Ce module GPS peut être utilisé pour deux applications spécifiques. La première application est une application de guidage c'est-à-dire que le module GPS est utilisé en coopération avec un logiciel de navigation afin de permettre de guider l'utilisateur d'un point de départ vers un point d'arrivée. Une deuxième application est la possibilité d'utiliser le module GPS dans une application de suivi notamment pour le sport c'est-à-dire permettre à l'utilisateur de savoir par où il est passé. La première application utilise le GPS pour indiquer le chemin à suivre alors que la deuxième application est utilisée pour le tracé parcouru.

Toutefois, cette intégration d'un module GPS dans une montre pose des problèmes. Le premier est qu'un module GPS consomme une grande quantité d'énergie électrique de sorte que les piles utilisées dans les montres se vident rapidement. Il devient donc nécessaire d'avoir des piles plus importantes ou d'utiliser des batteries rechargeables plus couteuses.

Le second problème est que ces applications nécessitent une certaine puissance de calcul pour fonctionner correctement. Or, l'augmentation de la puissance de calcul passe par l'utilisation de processeur plus performant et plus gourmand en énergie.

Une solution connue est d'avoir un système déporté. Pour cela, la montre fonctionne en coopération avec un autre appareil tel un téléphone mobile. En effet, ces téléphones mobiles sont eux aussi de plus en plus équipés de module GPS mais ont l'avantage d'être muni d'une électronique performante en terme de puissance de calcul mais aussi d'une batterie permettant une meilleur autonomie.

La montre et le téléphone sont agencés pour communiquer ensemble via une liaison sans fil de type Bluetooth pour que le téléphone puisse envoyer des informations de navigation. Ces informations sont affichées par la montre via un système d'affichage numérique du type écran LCD.

Néanmoins, cette solution ne résout pas totalement le problème de la consommation puisqu'un écran LCD consomme une quantité non négligeable d'énergie électrique.

### RÉSUMÉ DE L'INVENTION

A cet effet, la présente invention cherche à résoudre les problèmes susmentionnés et se propose de fournir un objet portable apte à fournir des indications sur plusieurs types d'activités tout en ayant une gestion de la consommation électrique efficace.

L'invention concerne donc un ensemble comprenant au moins un premier terminal comportant un boitier associé à un bracelet, un mouvement horloger électronique utilisé pour afficher l'heure via des moyens d'affichage et alimenté par une source d'énergie, et agencé dans ledit boitier, ledit premier terminal comprenant en outre un module de communication, et un second terminal comportant un boitier dans lequel un module électronique est agencé, ledit module électronique comprenant un processeur alimenté par une source d'énergie et connecté à des moyens d'affichage, une unité de localisation munie d'une antenne et apte à recevoir des signaux de positionnement, le module électronique comprenant en outre un module de communication apte à communiquer avec le module communication du premier terminal, ladite unité de localisation fonctionne avec un algorithme apte à définir un tracé en passant par une multitude de points de passage, caractérisé en ce que le module électronique est agencé pour, entre un point de passage et le point de passage suivant, déterminer le cap à suivre jusqu'audit point de passage suivant en fonction de la localisation dudit second terminal et pour envoyer cette information du cap à suivre vers le premier terminal via leur module de communication respectif afin que ledit premier terminal puisse l'afficher.

Cette invention permet avantageusement d'avoir un affichage GPS intuitif au poignet tout en ayant une bonne autonomie en utilisant le module GPS d'un autre appareil.

Dans un premier mode de réalisation avantageux, les moyens d'affichage du premier terminal comprennent au moins une aiguille et un repère de cap, ladite aiguille étant mise en mouvement pour pointer une direction par rapport audit repère de cap.

Dans un second mode de réalisation avantageux, les moyens d'affichage du premier terminal comprennent une aiguille des heures, une aiguilles des minutes et une aiguille des secondes et un repère de cap, les aiguilles étant mises en mouvement pour se chevaucher et pointer une direction par rapport audit repère de cap.

Dans un troisième mode de réalisation avantageux, les moyens d'affichage du premier terminal comprennent une aiguille des heures, une aiguilles des minutes et une aiguille des secondes et un repère de cap, les aiguilles étant mises en mouvement de sorte que l'aiguille des heures et celle des minutes pointent des directions opposées, l'aiguille des minutes et celle des secondes se chevauchant pour pointer une direction par rapport audit repère de cap.

Dans un quatrième mode de réalisation avantageux, les moyens d'affichage du premier terminal comprennent au moins un disque et un repère de cap, ledit disque étant mis en rotation pour pointer une direction par rapport audit repère de cap.

Dans un autre mode de réalisation avantageux, le point de passage final est entré manuellement, les autres points de passage étant calculés automatiquement par le second terminal.

Dans un autre mode de réalisation avantageux, le point de passage initial et le point de passage final sont entrés manuellement, les points de passage intermédiaires étant calculés automatiquement par le second terminal.

Dans un autre mode de réalisation avantageux, tous les points de passage sont entrés manuellement.

Dans un autre mode de réalisation avantageux, une partie des points de passage sont entrés manuellement, l'autre partie des points de passage intermédiaires étant calculés automatiquement par le second terminal.

Dans un autre mode de réalisation avantageux, le second terminal est un appareil choisi dans la liste comprenant : téléphone, ordinateur portable et tablette électronique.

Dans un autre mode de réalisation avantageux, le module de communication du premier terminal et le module de communication du second terminal sont agencés pour utiliser au moins un protocole de communication choisi dans la liste comprenant : Bluetooth ou NFC ou Wi-Fi.

### DESCRIPTION DES DESSINS

D'autres caractéristiques et avantages de l'invention apparaîtront à la lecture de la description détaillée qui va suivre, en référence aux dessins annexés, où :
- La figure 1 représente une vue schématique de l'ensemble selon l'invention ;
- Les figures 2 et 3 représentent schématiquement le tracé suivi par l'ensemble selon l'invention ;
- La figure 4 représente un schéma du premier terminal de l'ensemble selon l'invention ;
- La figure 5 représente schématiquement l'envoi de données entre le premier terminal et le seconde terminal de l'ensemble selon l'invention ;
- Les figures 6 à 10 représentent des modes d'exécution et leur variante quand à l'affichage de la donnée de cap sur le premier terminal.

### DESCRIPTION DÉTAILLÉE

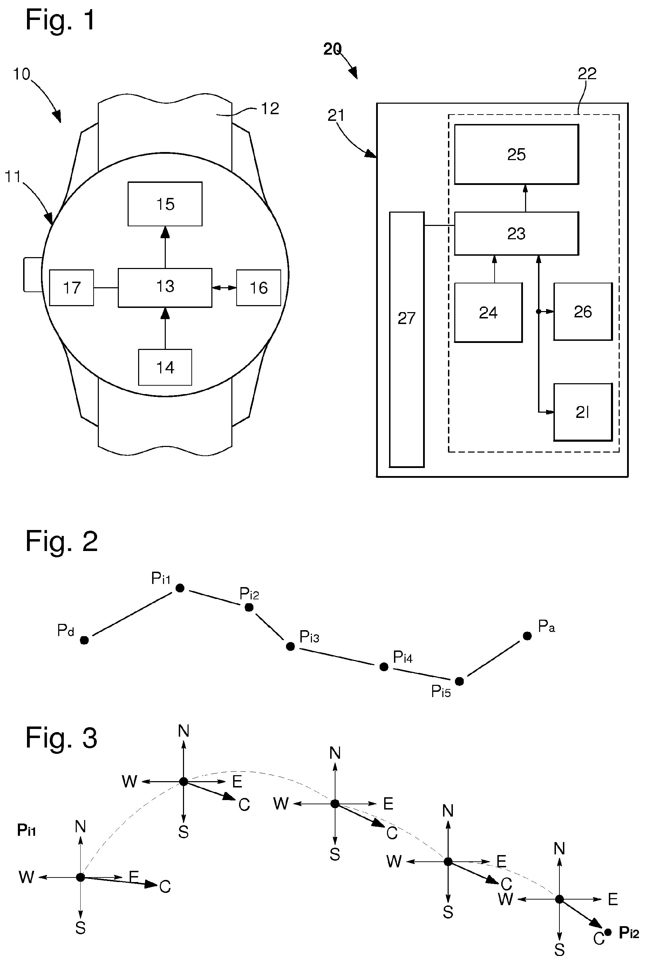

La figure 1 représente un ensemble 1 selon la présente invention. Un tel ensemble comprend un premier terminal 10 qui est une montre et un second terminal. Ce second terminal 20 pourra être un téléphone ou un ordinateur portable ou une tablette électronique.

Le premier terminal 10 est donc une montre qui comprend un boitier 11 muni d'un bracelet 12. Dans le boitier, un mouvement horloger électronique 13 alimenté par une source d'énergie 14 comme une pile ou batterie est utilisé pour afficher l'heure de la montre sur des moyens d'affichage 15. La montre comprend en outre un module de communication 16 permettant ladite montre de communiquer avec d'autres appareils électroniques utilisant le même protocole de communication, ce dernier pouvant être du type Bluetooth ou NFC ou Wi-Fi. Le tout est commandé par des moyens de commande 17.

Le second terminal 20, qui pourra être un téléphone ou un ordinateur portable ou une tablette électronique, comprend donc un boitier 21 dans lequel un module électronique 22 est agencé. Ce module électronique comprend un processeur 23 alimenté par une source d'énergie 24 et est apte à exécuter une multitude de fonctions et à afficher des informations sur des moyens d'affichage 25. Le module électronique 22 comprend en outre une unité de localisation 26 c'est-à-dire une unité munie d'une antenne et apte à recevoir des signaux de positionnement pouvant être satellites ou du type GSM et à les utiliser pour fournir une information. L'unité de localisation 26 peut utiliser le système GPS ou GLONASS ou Galiléo. Cette information peut être utilisée par un algorithme pour fournir une indication de positionnement ou de navigation. Le tout est commandé par des moyens de commande 27.

Selon l'invention, le second terminal 20 comprend en outre un module de communication 28 rendant le second terminal 20 apte à communiquer avec d'autres appareils électroniques dont le premier terminal 10 en utilisant un protocole de communication pouvant être du type Bluetooth ou NFC ou Wi-Fi. Cela permet au second terminal 20 de communiquer avec le premier terminal.

Avantageusement, l'invention prévoit que l'information récupérée par l'unité GPS 26 est utilisée par un algorithme pour fournir une indication, cette indication étant transférée au premier terminal afin d'être affichée par ce dernier.

Plus particulièrement, l'algorithme du second terminal c'est-à-dire l'appareil muni de l'unité GPS est utilisé pour générer un tracé entre un point de passage initial ou point de départ Pd et un point de passage final ou point d'arrivée Pa, entre ces deux points, une multitude de points intermédiaires Pii (Pi1 à Pi5) sont présents comme visible à la figure 2. Ce tracé peut être généré de plusieurs façons.

Dans une première façon, ce tracé est généré automatiquement de sorte que l'algorithme de navigation va définir par lui-même une multitude de points intermédiaires Pii.

Dans une seconde façon, les points intermédiaires Pii sont entrés manuellement par l'utilisateur afin qu'il puisse définir par lui-même le tracé qu'il désire.

Dans une troisième façon, les points intermédiaires Pii sont définis à la fois manuellement mais aussi automatiquement. On comprend par-là que le tracé est constitué de points intermédiaires Pii entrés manuellement faisant office d'étapes désirées et de points intermédiaires Pii définis automatiquement par l'algorithme. Dans un exemple non représenté expliquant cette troisième façon, on prendra l'exemple d'un tracé entre le point de départ A et le point d'arrivée B. L'utilisateur entrera manuellement les points étapes C et D par lesquels le tracé devra passer mais l'algorithme de navigation définira automatiquement des points intermédiaires entre les points A-C, C-D et D-B.

Une fois que le tracé est calculé avec les divers points intermédiaires Pii, une connexion sans fil est réalisée entre le premier terminal 10 et le second terminal 20 via leur module de communication respectif.

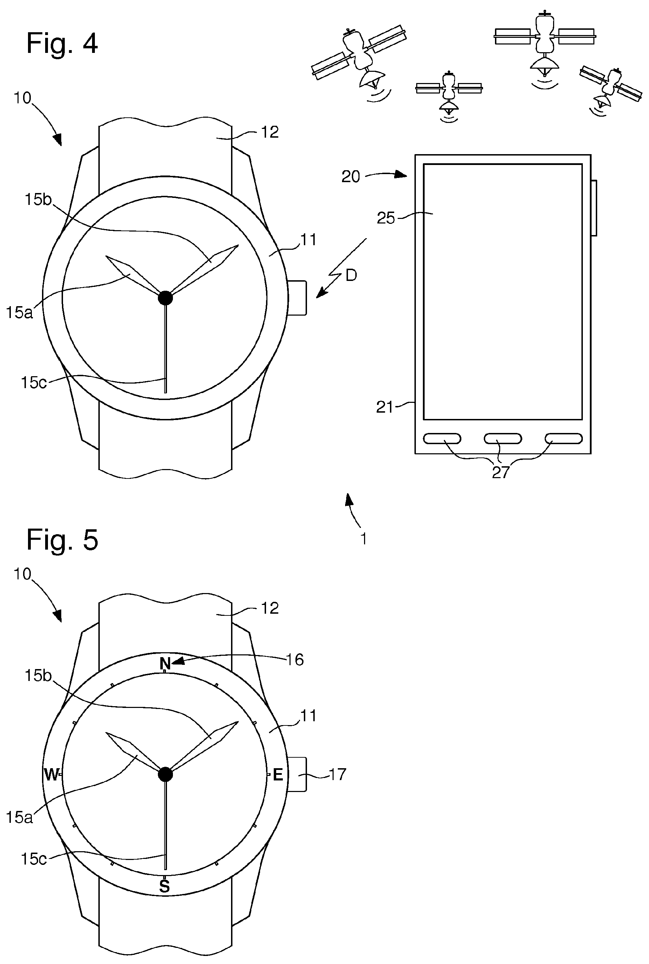

La fonction navigation consiste alors à, en temps réel, définir la position du porteur des terminaux via l'unité de localisation 26 et à calculer le cap C à suivre jusqu'au prochain point intermédiaire Pii comme visible à la figure 3. Cette information sur le cap C à suivre est alors envoyée sous forme de données D vers la montre 20 via la connexion sans fil comme visible à la figure 4. Ces données sur le cap C sont alors utilisées par la montre 20 pour être affichées. Pour cela, les moyens d'affichage 15 entrent dans un mode particulier dans lequel ils sont modifiés pour afficher cette information de cap C.

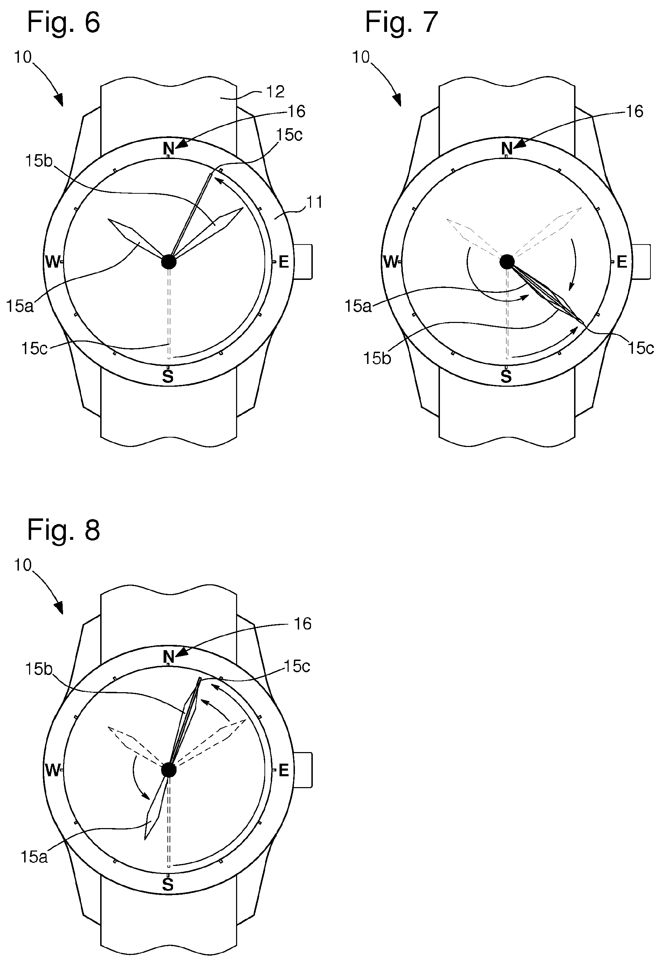

Dans un premier mode d'exécution visible à la figure 5, les moyens d'affichage 15 comprennent une aiguille des heures 15a, une aiguille des minutes 15b et une aiguille des secondes 15c, ces aiguilles étant pilotées chacune par un moteur électrique. Dans ce premier mode d'exécution, au moins l'une des aiguilles est mise en mouvement. Cette aiguille est mise en mouvement afin d'indiquer un cap sur un repère 16. Il pourra être prévu des index indiquant les points cardinaux sur le cadran ou sur la lunette. Idéalement, c'est l'aiguille des secondes 15c qui est mise en mouvement comme visible à la figure 6.

Dans une variante avantageuse, la totalité des aiguilles est mise en mouvement. En effet, si une seule aiguille 15a, 15b, 15c sur trois est mise en rotation, le risque de confusion existe de sorte que l'utilisateur peut, à un certain moment, perdre le cap à suivre. Cette variante se propose alors de mettre en mouvement la totalité des aiguilles 15a, 15b, 15c afin qu'elles puissent présenter une configuration particulière. Un exemple de configuration est d'avoir toutes les aiguilles 15a, 15b, 15c pointant dans la même direction comme visible à la figure 7 ou alors d'avoir l'aiguille des heures et l'aiguille des minutes diamétralement opposées, l'aiguille des secondes chevauchant celle des minutes de sorte à voir les aiguilles former une aiguille de boussole avec les grandes aiguilles (minutes et secondes) formant la pointe de l'aiguille de boussole et l'aiguille des heures formant le base de l'aiguille de boussole comme visible à la figure 8.

Bien entendu, il pourra être prévu que seulement deux aiguilles se mettent en mouvement pour indiquer le cap à suivre.

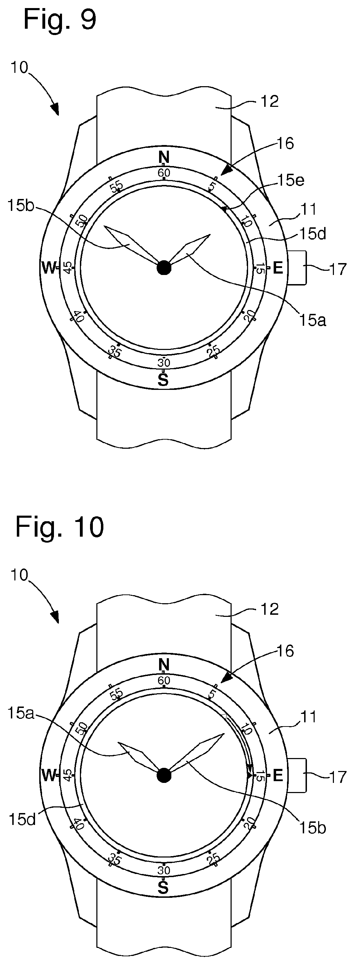

Dans un second mode d'exécution, les moyens d'affichage 15 comprennent au moins un disque rotatif 15d par exemple pour les secondes. Ce disque rotatif 15d est muni d'un indicateur 15e tel un marquage en forme de flèche servant à pointer une échelle située au niveau du cadran. Lorsque la fonction navigation est activée, le disque est mis en rotation de sorte que son indicateur pointe le cap à suivre comme visible à la figure 10.

Une fois le premier point intermédiaire atteint, c'est le second point intermédiaire qui est pris comme « cible » ou but à atteindre de sorte que le module GPS calcule la position actuelle et la compare à la position du point intermédiaire à atteindre pour déterminer le cap à suivre.

Si le porteur de la montre dévie de la trajectoire indiquée par les moyens d'affichage, cette déviation est perçue par le module GPS de sorte que le calcul du cap est réactualisé et que les moyens d'affichage affichent le bon cap jusqu'au prochain point intermédiaire.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention définie par les revendications annexées.

## Revendications

1. Ensemble comprenant au moins un premier terminal (10) comportant un boitier (11) associé à un bracelet (12), un mouvement horloger électronique (13) utilisé pour afficher l'heure via des moyens d'affichage (15) et alimenté par une source d'énergie (14), et agencé dans ledit boitier, ledit premier terminal comprenant en outre un module de communication (16), et un second terminal (20) comportant un boitier (21) dans lequel un module électronique (22) est agencé, ledit module électronique comprenant un processeur (23) alimenté par une source d'énergie (24) et connecté à des moyens d'affichage (25), une unité de localisation (26) munie d'une antenne et apte à recevoir des signaux de positionnement, le module électronique comprenant en outre un module de communication (28) apte à communiquer avec le module communication du premier terminal, ladite unité de localisation fonctionne avec un algorithme apte à définir un tracé en passant par une multitude de points de passage (Pii), **caractérisé en ce que** le module électronique est agencé pour, entre un point de passage (Pii) et le point de passage (Pii+1) suivant, déterminer le cap (C) à suivre jusqu'audit point de passage suivant en fonction de la localisation dudit second terminal et pour envoyer cette information du cap à suivre vers le premier terminal (10) via leur module de communication (16, 28) respectif afin que ledit premier terminal puisse l'afficher.

2. Ensemble selon la revendication 1, **caractérisé en ce que** les moyens d'affichage (15) du premier terminal comprennent au moins une aiguille (15a, 15b, 15c) et un repère (16) de cap, ladite aiguille étant mise en mouvement pour pointer une direction par rapport audit repère de cap.

3. Ensemble selon la revendication 2, **caractérisé en ce que** les moyens d'affichage (15) du premier terminal comprennent une aiguille des heures (15a), une aiguilles des minutes (15b) et une aiguille des secondes (15c) et un repère de cap, les aiguilles étant mises en mouvement pour se chevaucher et pointer une direction par rapport audit repère de cap.

4. Ensemble selon la revendication 2, **caractérisé en ce que** les moyens d'affichage du premier terminal comprennent une aiguille des heures, une aiguilles des minutes et une aiguille des secondes et un repère de cap, les aiguilles étant mises en mouvement de sorte que l'aiguille des heures et celle des minutes pointent des directions opposées, l'aiguille des minutes et celle des secondes se chevauchant pour pointer une direction par rapport audit repère de cap.

5. Ensemble selon la revendication 1, **caractérisé en ce que** les moyens d'affichage (15) du premier terminal comprennent au moins un disque (15d) muni d'un indicateur (15e) et un repère (16) de cap, ledit disque étant mis en rotation pour pointer une direction par rapport audit repère de cap.

6. Ensemble selon l'une des revendications précédentes, **caractérisé en ce que** le point de passage final (Pa) est entré manuellement, les autres points de passage étant calculés automatiquement par le second terminal.

7. Ensemble selon l'une des revendications 1 à 5, **caractérisé en ce que** le point de passage initial (Pd) et le point de passage final (Pa) sont entrés manuellement, les points de passage intermédiaires (Pii) étant calculés automatiquement par le second terminal.

8. Ensemble selon l'une des revendications 1 à 5, **caractérisé en ce que** tous les points de passage sont entrés manuellement.

9. Ensemble selon l'une des revendications 1 à 5, **caractérisé en ce qu'**une partie des points de passage sont entrés manuellement, l'autre partie des points de passage intermédiaires étant calculés automatiquement par le second terminal.

10. Ensemble selon l'une des revendications précédentes, **caractérisé en ce que** le second terminal est un appareil choisi dans la liste comprenant : téléphone, ordinateur portable et tablette électronique.

11. Ensemble selon l'une des revendications précédentes, **caractérisé en ce que** le module de communication du premier terminal et le module de communication du second terminal sont agencés pour utiliser au moins un protocole de communication choisi dans la liste comprenant : Bluetooth ou NFC ou Wi-Fi.
